# EUROPEAN PATENT SPECIFICATION

(11) **EP 1 362 779 B1**
(45) Date of publication and mention of the grant of the patent: **20.04.2011**
(21) Application number: 03253106.3
(22) Date of filing: 19.05.2003
(51) Int. Cl.: B62K 5/00, B60G 17/015, B60G 21/00, B62D 7/06, B62D 7/16, B62D 17/00

(54) **Motorcycle-type vehicles**
Motorradartiges Fahrzeug
Véhicule de type motocycle

(30) Priority: 27.09.2002 GB 0222385; 17.05.2002 GB 0211399; 17.03.2003 GB 0306023
(43) Date of publication of application: 19.11.2003
(73) Proprietor: The Four Wheeled Motorcycle Company Limited, Enfield Middlesex EN2 8HR (GB)
(72) Inventor: Nick Shotter, Enfield Middlesex EN2 8HR (GB)
(74) Representative: Vleck, Jan Montagu

(56) References cited:
- EP-A- 0 606 191
- EP-A- 1 142 779
- WO-A-02/44008
- WO-A-99/41136
- WO-A-03/018390
- FR-A- 2 522 590
- FR-A- 2 550 507
- US-A- 4 756 379
- US-A- 4 887 829

## Description

This Invention relates to motorcycle-type vehicles having, at at least one end of the vehicle, a pair of wheels which tilt with the vehicle.

Such vehicles are known having a swing arm for each such wheel, the swing arms being pivotally mounted on the vehicle for angular movement about transverse pivotal axes, a damper for each swing arm together with a resilient connection, the two swing arms being interconnected by means for imposing corresponding movements of the swing arms in opposite directions and means selectively operable to lock the suspension.

Examples of such vehicles are disclosed In EP0606191A1 and WO02/44008A2 which constituted the closest prior art. A vehicle according to the invention is characterized In that the selectively operable locking means comprise the dampers.

The invention as disclosed by the features of independent claim 1 will now be described In more detail by way of example with reference to the accompanying drawings, In which:
Fig. 1 is a diagrammatic perspective view of a vehicle according to the Invention seen from the right hand rear and from above,
Fig. 2 is a perspective view from the front, right and from above,
Fig. 3 is a simplified diagrammatic view of the front suspension.
Figs 4a to 4d are schematic views of the left front wheel, as seen from the front, showing different possible steering axes.
Figs. 5a and 5b are views of the front wheels, as seem from the front with negative and positive camber respectively,
Fig. 6 shows the front wheels with positive camber, on a curve,
Figs. 7a to 7f are front views of the vehicle on a curve under various conditions,
Fig. 8a is a diagrammatic side view of a modified vehicle with 'lowered' suspension, and
Fig. 8b is a view corresponding to Fig. 8a showing the effect on the wheelbase lengths as the vehicle rounds a curve,
Fig. 9 shows variations of Fig. 3 diagrammatically.
Fig. 10a is a transverse view of a C shape swing arm, and
Fig. 10b is a front view of Fig. 10a.

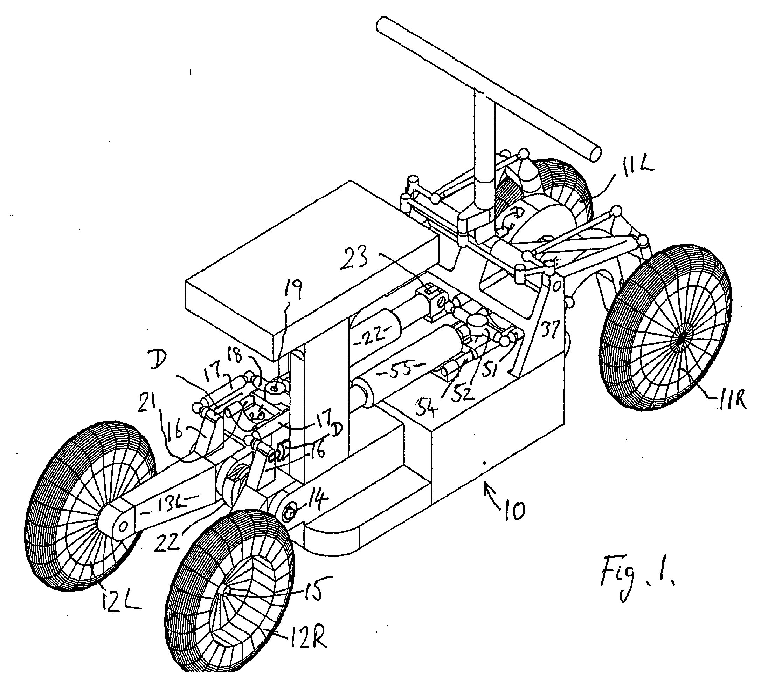

The vehicle shown in Figs. 1 to 3 is of generally similar construction to those which form the subject of my co-pending International Application number WO 02/044008.

In particular, the vehicle has a main chassis 10 containing an engine and transmission (not shown). The chassis is supported on a road surface by means of two front wheels 11L and 11R and two rear wheels, 12L and 12R. At the rear, the chassis is supported on the rear wheels 12L,R by swing arms 13L, 13R which are pivoted at 14 to the chassis 10 at their forward ends and carry stub shaft 15 at their rear ends on which the rear wheels are rotatably mounted. The rear swing arms 13 also carry road brakes (not shown). Each rear swing arm 13 carries an upstanding lug 16, the lug 16 being connected by pivoted links 17 to opposite ends of a balance beam 18 which is pivoted at 19 at its mid-point to a carriage 20 which is slidable along guide rods 21 under the control of a spring unit 22 the forward end of which is anchored at 23 to the chassis. The spring unit 22 may include a hydraulic ram as described in international application WO 02/044008.

Thus, as the vehicle is tilted and one rear swing arm 13 moves upwards while the other moves downwards, the balance beam 18 turns on its pivot. If a dangerous situation arises in which the rider is about to lose control, relative angular movement between the rear swing arms 13 can be stopped or limited, either by engagement of the brake 22 or by the use of a separate damper D for each swing arm. In the latter case, the dampers can be interconnected through a valve which can be closed by a solenoid, or the working medium in the dampers can be of the kind which can be stiffened electrically.

Some residual suspension movement would be provided by including a resilient block or mounting at at least one end of each damper D.

By having a separate damper for each swing arm, effective damping of even small suspension movements is obtained since the dampers are individually smaller and subject to larger movements than where a single damper is used.

In a modified arrangement, the dampers act between the beam ends and the chassis. In order to limit the angle through which the vehicle can lean, the range of angular movement of the beam 18 about its pivot can be limited by stops acting between the beam 18 and its carriage 20. Even in one of such limit positions of the beam, full resilient suspension is still available.

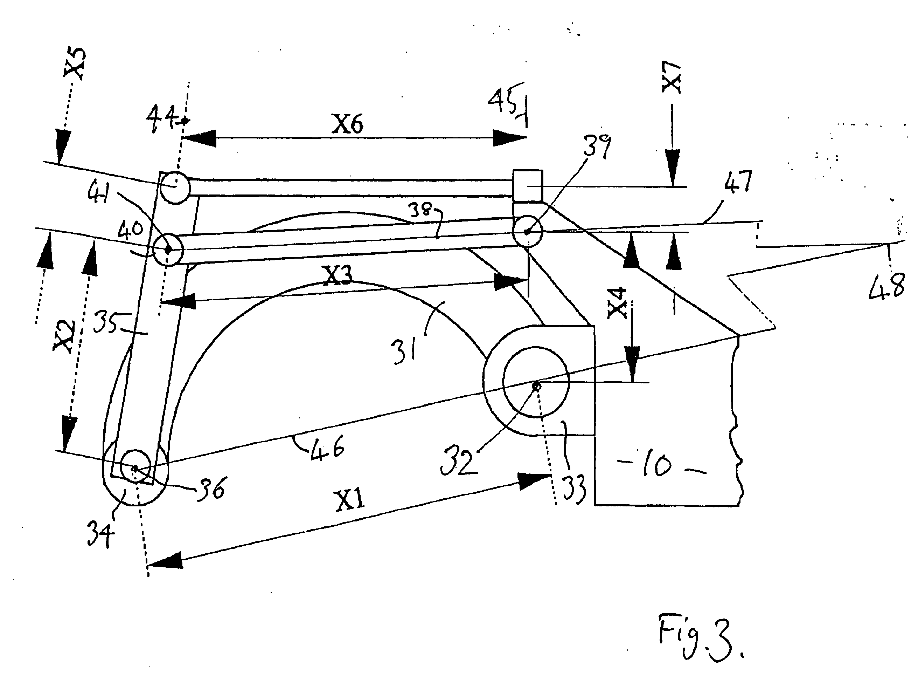

At its front end, the chassis 10 is supported on the front wheels 11 by means of front swing arms 31L, 31R which are upwardly arched so as to be of J or C shape so as to clear the rear portion of the front wheels when they are turned for steering purposes. As can be seen in Fig. 3, the rear end of each front swing arm 31 is pivoted about an axis 32 to a bracket 33 on the chassis 10. At its forward end, each front swing arm 31 carries a ball joint 34 by which it is connected to the lower end of a king strut 35 about a centre of articulation 36.

The chassis 10 includes a bridge portion 37 to which left and right upper wishbone frames 38L and 38R are pivotally mounted on transverse pivots having axes 39.

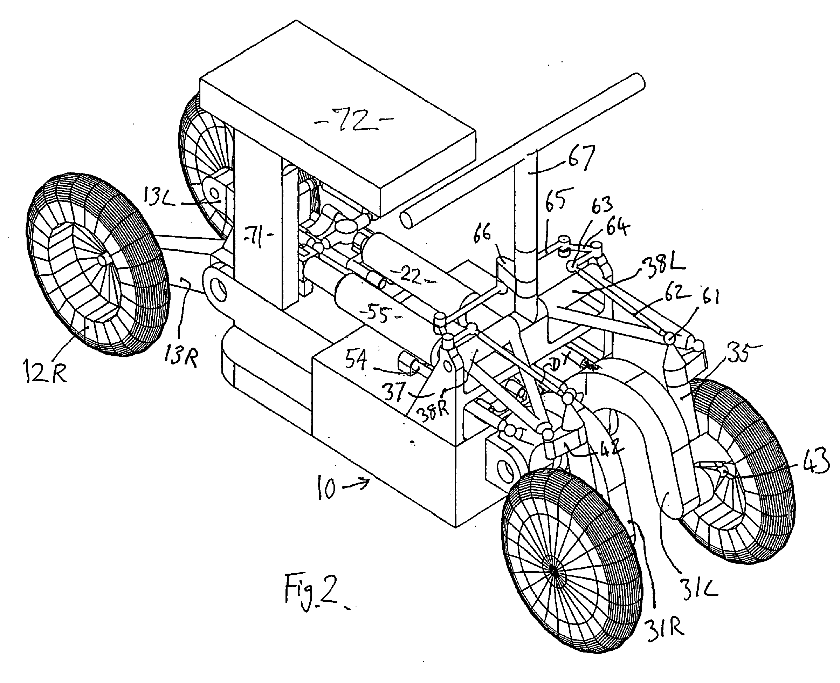

The forward end of each wishbone 38 is articulated by a ball joint 40 having a centre 41 to a lateral projection 42 (Fig. 2) on the king strut 35. The lower end of the king strut 35 carries a stub shaft 43 on which the respective front wheel is rotatably mounted (together with a suitable brake). The ball joint centres 36 and 41 thus define the equivalent to a king pin axis 44. As can be seen from Fig. 3, this intersects the plane 45 through the axes 32 and 39 at a point above the front wheel. Moreover, a plane 46 through the axis 32 and ball-joint centre 36 intersects a plane 47 through the axis 39 and the ball-joint centre 41 at a line 48 to the rear of the front suspension. This reduces the tendency of the front of the vehicle to dip when braked hard as compared with the situation where the planes 46 and 47 would be parallel. As in the case of the rear suspension, the front swing arms are connected by pivoted links 51 to opposite ends of a front balance beam 52, pivotally mounted about a vertical axis to a carriage 53, slidable on guide rods 54 under the action of a spring unit 55. Again, individual dampers D can be interconnected between the front swing arms 31 and the chassis 10 as described above in respect of the rear swing arms and angular movement of the balance beam 52 relative to its carriage 53 is limited by stops.

Each front wheel is steered by turning the king strut 35 about the axis 44. For this purpose, the upper end of the king strut carries a ball joint 61 which articulates the front end of a drag link 62, the rear end of which is connected by a ball-joint 63 to a bell crank 64 pivoted on the bridge 37, the other arms of the bell crank 64 being connected by links 65 to an arm 66 on a handlebar assembly 67, supported for rotation in the bridge 37.

Towards the rear, the chassis 10 carries a pillar 71 supporting a seat 72.

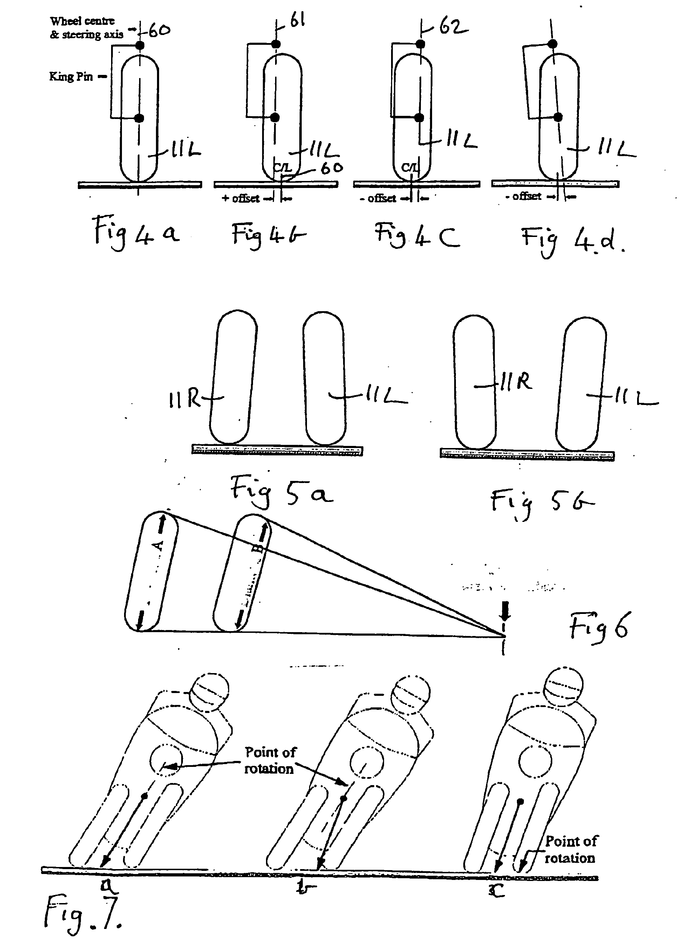

Figs. 4a to 4d represent the vehicle's front left wheel and king-pin viewed from the front. Fig. 4a shows the steering axis 60 located through the wheel's centre line, but variations from this position are likely to be beneficial. For instance, in Fig. 4b the steering axis 61 has a positive offset, i.e., moved inboard away from the wheel's centre line 60. This would allow more room within the narrow confines of a motorcycle / scooter wheel-hub for components such as the brake and wheel bearing, and make the steering lighter when stationary, which might be significant given the traffic negotiating abilities of the vehicle and the large steering angles needed to get around stationary traffic. This last aspect is due to more of the tyre contact patch being able to rotate around the steering axis 61 instead of being subject to tyre scrub.

Fig. 4c shows negative offset which would still allow more of the tyre contact patch to be able to rotate around the steering axis 62 as in Fig. 4b, but would also help to keep the vehicle in a straight line during a front tyre blow-out or braking when differing levels of grip are encountered between the left and right sides of the vehicle. This last aspect works in this way: the rolling resistance of a flat tyre is greater than when it was inflated, consequently the vehicle will pull towards the side of the vehicle with the flat tyre. However, this tendency is countered by the negative offset because the centre of the wheel's centre line lies on the inside of the offset. Therefore, the increased drag of the flat tyre will pull at the wheel to steer away from the side of the vehicle with the flat tyre. Consequently, the pull on the vehicle towards the flat tyre is countered by the pull on the steering away from it. Likewise, under braking, the vehicle will tend to pull towards the side with more grip, whilst the steering will tend to turn away from the side with more grip.

This drag effect caused by either a positive or a negative offset could also be used to take in the combined clearances of the steering joints that might be an issue with this type of steering. For instance, if a positive offset was used, the front wheels could point towards each other slightly, or toe-in, when the vehicle was stationary and if a negative offset was used, the front wheels could point away from each other or toe-out. In both instances, the wheels would resume a straight ahead position when the vehicle was moving by the rolling resistance taking up the combination of small clearances in the steering.

Fig. 4d shows the king-pin inwardly inclined at its top which allows extra room for wheel-hub components; as in Fig. 4b lighter stationary steering; as in Figs. 4b and 4c; and the additional stability during braking, etc. as in Fig. 4c. A further aspect of this inwardly inclined king-pin is that as the steering turns the vehicle will tend to lift and thereby act against gravity. Consequently, gravity will try to return the vehicle's rider's mass back to the lowest possible position. The effect of this is to self-align the steering which could aid the steering self-alignment created by the trail, or be sufficient to eliminate the need for trail altogether. Lastly, the king-pin could be inclined the other way if need be.

Fig. 5a shows a negative camber angle with the wheels inwardly inclined. This would make the distance across the top of the wheels smaller and thereby allow any wheel-covering fairing to be narrower than if the wheels were upright, which keeps the vehicle as narrow as possible to help it get through traffic. Furthermore, when negotiating a bend the inside wheel will be more upright than the outside wheel which could help grip should the vehicle lose grip during the bend. This is due to the resultant force reducing its angle from the vertical when a loss in grip is experienced which makes the weight bear more on the wheels that are on the inside of the bend, especially with the engagement of the suspension brake.

Alternatively, Fig. 5b shows a positive camber angle with the wheels outwardly inclined. This would create more room for wheel-hub components, and makes the inside wheel in a bend lean more which makes the 'rolling-cone' effect of the inside wheel greater than the outside wheel. This last aspect may be beneficial as the inside wheel has to turn more than the outside wheel anyway.

The 'rolling cone' effect (Fig. 6) is to do with rounded tyre profiles which results in the tyre's centre travelling faster than the tyre's edge. This is because the tyre's centre has a greater diameter than the tyre's edge. Therefore, if such a tyre was inclined at a reasonable angle but travelling in a straight line the edge of the tyre would scrub as the tyre's centre grips. This drag promotes a turning motion so that the smaller diameter tyre edge can travel around a smaller circle than the tyre's centre, and thereby reduce the drag. The greater the inclination of the tyre the smaller the circle it wants to turn around. This aspect could also be used for the rear wheels.

By choosing between negative and positive camber, both at the front and the rear, the front and rear slip angles can be altered to redress understeer or oversteer, especially with flatter profile tyres.

As shown in Fig. 3, the stub axle for the wheel is shown in line with the bottom king-pin joint. Alternatively, the stub axle could be:
above this position to maintain a constant wheelbase when braking, encountering bumps or when leaning around a bend,
below this position so the king-pin and leading arm could be shorter and thereby reduce unsprung weight,
in front of this position to reduce trail if a large king-pin angle was needed for other aspects of the steering such as shorter and thereby stiffer and lighter upper arm and drag link, or to move the wheel away from the leading arm to help clearance when turning, or to shift the vehicle's footprint towards the inside of a bend,
behind this position to increase trail if a steep king-pin angle is needed for the overall steering geometry,
combinations of the above, or
the brake plate could be isolated from the king-pin and rotate around the stub axle and linked to the chassis via a rod as one method of obtaining anti-dive.

When a vehicle loses grip in a bend the centrifugal force that was being produced prior to the loss of grip decreases but gravity remains the same. This causes the resultant force angle to reduce from the vertical. In such circumstances the vehicle's angle of lean initially remains unaltered until the reducing resultant force moves away from the vehicle's centre line towards the inside of the bend. The vehicle's centre of mass will then follow the new resultant force angle and cause the vehicle to fall down on the side where the resultant force is acting. This is due to the axis of the vehicle's lateral rotation being on the vehicle's centre line. To move in the opposite direction, therefore, that is towards alignment with the new angle of resultant force, would require the vehicle's centre of mass to act against the resultant force because the highest point for the vehicle's centre of mass is when it is aligned with the resultant force. However if the leading and trailing arms on the inside of the bend were locked up, when the resultant force indicator registered a loss of grip and the suspension height was simultaneously lowered by the hydraulic ram as disclosed in international application number WO 02/044008 the reduced resultant force would pull the vehicle down via the unlocked leading and trailing arms as the locked leading and trailing arms become the point of rotation instead of the vehicle's centre line. In this way the vehicle's angle of lean could be brought back to be in line with the reduced angle of resultant force as recorded by the resultant force indicator or sensor.

In Fig. 7a, the vehicle is in line with the resultant force whilst negotiating a bend. In Fig. 7b, the vehicle loses grip and the resultant force drops off. Between Figs. 7b and 7c the inside leading and trailing arms have been locked up, which moves the point of the vehicle's lateral rotation from the centre of the vehicle to the contact area of the vehicle's wheels which are on the inside of the bend. At the same time the hydraulic ram lowers the suspension assembly which can only act on the unlocked suspension arms which leads to realignment as shown in Fig. 7c.

When such realignment occurs a number of options are available, for instance, the ram could stop moving, the locked leading and trailing arms could be released and the ram raise the vehicle again, the unlocked leading and trailing arms could be locked up as well until the vehicle reduces speed to a pre-determined amount or until the system was manually over-ridden by the manual control lever.

In the less likely event of the vehicle unexpectedly turning more sharply into a bend, the angle of resultant force increases, which would cause the vehicle to high-side as the resultant force would be acting on the outside of the vehicle's central point of lateral rotation. In such circumstances the leading and trailing arms lying on the outside of the bend could be locked up whilst the ram simultaneously lowers the suspension which would further tilt the vehicle over until alignment occurred, or at least sufficiently enough to stop the increased resultant force from acting beyond the vehicle's footprint.

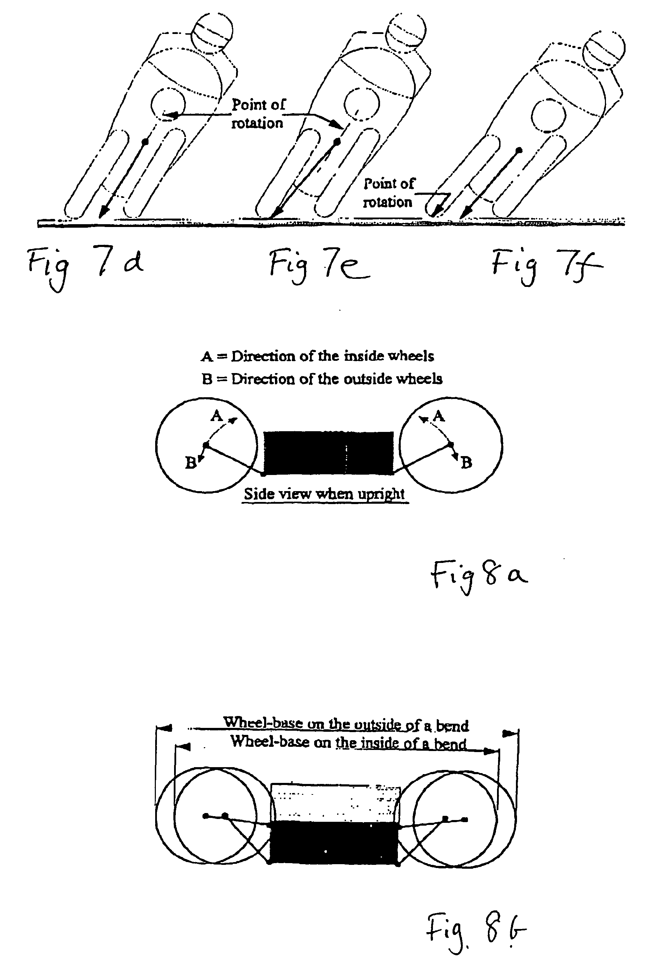

In Fig. 7d the vehicle is in line with the resultant force whilst negotiating a bend. In Fig. 7e the vehicle unexpectedly turns sharper into a bend, which may follow an initial losing of grip and the resultant force increases. Between Figs. 7e and 7f the outside leading and trailing arms have been locked up which moves the point of the vehicle's lateral rotation from the centre of the vehicle to the contact area of the vehicle's wheels which are on the outside of the bend. At the same time the hydraulic ram lowers the suspension assembly which can only act on the unlocked suspension arms which leads to the position shown in Fig. 7f, that is realignment, or just by an amount sufficient to keep the resultant force within the vehicle's footprint.

In one variant described in the above-mentioned International application number WO 02/044008, the suspension arms were braked by means of a brake quadrant mounted on, for instance, each left suspension arm journal and a brake caliper mounted on each right suspension arm journal. To utilise such an arrangement in the above context would require four brake calipers and four brake quadrants in addition to the four brake discs and four brake calipers needed for the wheels. A potentially better way is to have a separate damper for each leading and trailing arm which could be electrochemically stiffened at the required moment. Alternatively a solenoid activated valve could shut off the oil flow through the dampers to prevent further movement taking place. An additional feature of this arrangement is that the single spring / damper envisaged for each end of the new vehicle need only be a spring, with the four new dampers also acting as the damping for the suspension. In this way only two additional dampers and some electronics are needed instead of suspension brakes. Furthermore, the suspension journal residual suspension brake method that was disclosed in International application number WO 02/044008 could be eliminated as the dampers could incorporate some internal spring to cater for this role.

Referring to Figs. 8a and 8b, by positioning the suspension arm journals below the wheel centres on the left-side wheel-base gets shorter when the vehicle leans to the left whilst the right-side wheel-base gets longer and vice versa. This characteristic is due to the different parts of a circle being travelled by the left and right suspension arms. For instance, the suspension arms on the inside of a bend travel away from the horizontal, whilst the suspension arms on the outside of the bend travel towards the horizontal. The former shortens the wheel-base whilst the latter lengthens it.

The significance here is that the leverage from the suspension spring / damper is reduced for the wheels on the inside of the bend and increased for the wheels on the outside of the bend. This has the effect of biassing the suspension pressure towards the inside wheels in a bend which will tend to keep the vehicle more vertical than the resultant force being generated. The possible advantage of this characteristic is during a misalignment when the vehicle begins to fall which causes the resultant force to drop off and thereby partially unloads the suspension. The corresponding rise in the vehicle's ride height, due to the suspension becoming unloaded back towards 1G (gravity) is biassed to the lower side, due to the unequal spring loading, and thereby promotes a tilting action away from the falling tendency. In this way some delay in the fall of the vehicle will occur.

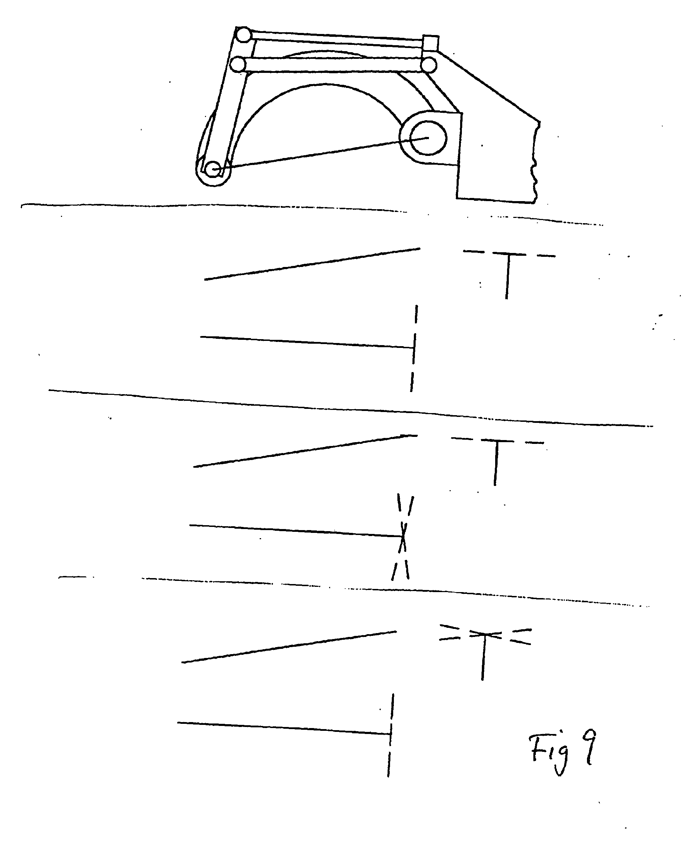

Referring to Fig. 9, in the first of the diagrams the side view of the leading arm could be represented with just a line running from the stub axle axis to the leading arm journal axis. The next diagram shows this line as the side elevation of the leading arm with the line below it as the plan view and the view to the right as the front view, all drawn in first angle projection. The interrupted line shows the leading arm axis of rotation. As shown in the next diagram down, this axis of rotation does not have to be completely laterally located, instead the leading arms could be semi-leading as some angular movement either side of the true lateral position may be beneficial. For instance, with the axis angled outward (positively), the leading arms would tend to move towards each other as they rise and fall. In the process the contact patch of the tyres would tend to move away from each other as the leading arms rise, or move towards each other as they fall. The effect of this when the vehicle is leaning around a bend is that the wheels remain more upright which would allow flatter section tyres and thereby more grip, the vehicle footprint moves towards the inside of the bend which may be desired, during heavy braking without an anti-dive arrangement the front track would tend to get wider and thereby generate a bit more stability. Alternatively with the axis pointing the other way (negative) the vehicle's footprint is moved towards the outside of a bend which may be desired. A positive or negative leading arm arrangement may also be required to achieve an overall suitable steering and suspension geometry.

In the last diagram the leading arm axis is angled in either direction from the true vertical which might also be necessary to achieve an overall suitable steering and suspension geometry.

Lateral and vertical movement for the leading arm journal axis or combinations can also be applied to the back of the vehicle to form semi-trailing arms. Apart from the reasons given above the variations can alter the vehicle's 'roll centre' at either end of the vehicle which can influence the way the vehicle behaves during a bend.

In a similar way the upper arm journal axis could be aligned from the true lateral and vertical positions, or a combination of the two, as could the drag link, to achieve an overall suitable steering and suspension geometry.

It is important to keep the front wheels at an angle suitable for the road conditions encountered by the vehicle and the vehicle's direction is dictated by the rider. If, for instance, a true parallelogram is not used the resulting difference in steering between the front wheels, whilst leaning to negotiate a bend especially, might be sufficient to require countering the effect by some of the above.

Where the suspension includes means for locking the suspension arms against substantial movement relative to each other, the locking means may be responsive to a sensor including a pendulum with light damping such that the pendulum can follow normal lateral tilting of the vehicle but cannot follow abnormal movements and this can operate appropriate switch and / or valve means.

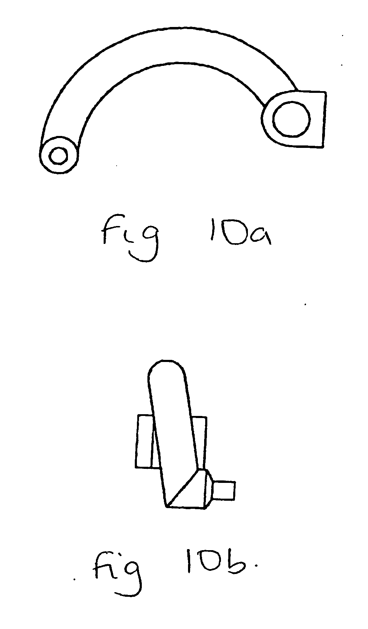

Further, the vehicle may have either one or two front wheels to each of which is attached a J or C shaped front swing arm forming part of a quadrilateral linkage. This swing arm could be inclined at an angle (see Figs. 10a and 10b) to help keep the vehicle's centre of gravity low, whilst also allowing wheel clearance as in the previous embodiment.

## Claims

1. A motorcycle-type vehicle having at at least one end of the vehicle a pair of wheels which tilt with the vehicle, a swing arm (13 or 31) for each said wheel, the swing arms being pivotally mounted on the vehicle for angular movement about transverse pivotal axes, a damper (D) for each swing arm, each damper connecting the associated swing arm to the vehicle together with a resilient connection, the two swing arms being interconnected by means (18 or 52) for imposing corresponding movements of the swing arms in opposite directions and means for selectively locking the suspension **characterised in that** the locking means comprise the dampers (D).

2. A motorcycle-type vehicle according to claim 1, **characterised in that** the locking means block movement of operating medium in the dampers (D).

3. A motorcycle-type vehicle according to claim 2, wherein the dampers are interconnected through a valve which can be closed by a solenoid.

4. A motorcycle-type vehicle according to claim 1 or 2, wherein the working medium in the dampers is electrically stiffenable.

5. A motorcycle-type vehicle according to any of the preceding claims wherein a resilient means is incorporated at at least one end of each damper to provide some residual suspension movement when the locking means are operated.

6. A motorcycle-type vehicle according to any preceding claim having a said pair of wheels at the front, wherein a quadrilateral link is formed for each wheel by the swing arm (31), an upper arm (38) pivotally mounted at a rear end for angular movement about a transverse axis of the vehicle, and a strut (35) articulated at its upper end to the upper arm (38) and at its lower end to the swing arm, and a rod system (62 to 65) interconnects a steering control member (67) with each strut (35).

## Patentansprüche

1. Fahrzeug vom Motorradtyp, das an wenigstens einem Ende des Fahrzeugs ein Paar Räder, die mit dem Fahrzeug geneigt werden, eine Schwinge (13 oder 31) für jedes genannte Rad, wobei die Schwingen zur Winkelbewegung um transversale Drehachsen drehbar am Fahrzeug montiert sind, einen Stoßdämpfer (D) für jede Schwinge, wobei jeder Dämpfer die ihm zugeordnete Schwinge zusammen mit einer federnden Verbindung mit dem Fahrzeug verbindet, wobei die zwei Schwingen mit Einrichtungen (18 oder 52) zum Ausüben entsprechender Bewegungen der Schwingen in entgegengesetzten Richtungen miteinander verbunden sind, und Einrichtungen zum selektiven Blockieren der Federung hat, **dadurch gekennzeichnet, dass** die Blockiereinrichtungen die Dämpfer (D) beinhalten.

2. Fahrzeug vom Motorradtyp nach Anspruch 1, **dadurch gekennzeichnet, dass** die Blockiereinrichtungen die Bewegung des Arbeitsmediums in den Stoßdämpfern (D) blockieren.

3. Fahrzeug vom Motorradtyp nach Anspruch 2, bei dem die Stoßdämpfer durch ein Ventil miteinander verbunden sind, das von einem Elektromagnet geschlossen werden kann.

4. Fahrzeug vom Motorradtyp nach Anspruch 1 oder 2, bei dem das Arbeitsmedium in den Stoßdämpfern elektrisch versteifbar ist.

5. Fahrzeug vom Motorradtyp nach einem der vorhergehenden Ansprüche, bei dem an wenigstens einem Ende jedes Stoßdämpfers eine federnde Einrichtung eingebaut ist, um bei Aktivieren der Blockiereinrichtungen eine Restfederungsbewegung zu ergeben.

6. Fahrzeug vom Motorradtyp nach einem der vorhergehenden Ansprüche, das vorne ein genanntes Räderpaar hat, wobei für jedes Rad von der Schwinge (31), einem oberen Lenker (38), der für Winkelbewegungen um eine Querachse des Fahrzeugs drehbar an einem hinteren Ende montiert ist, und einem Federbein (35), das an seinem oberen Ende an den oberen Lenker (38) und an seinem unteren Ende an der Schwinge angelenkt ist, eine Viergelenkkette gebildet wird und ein Gestänge (62 bis 65) ein Lenkungssteuerelement (67) mit jedem Federbein (35) verbindet.

## Revendications

1. Véhicule de type motocycle ayant au moins à une extrémité du véhicule une paire de roues qui s'inclinent avec le véhicule, un bras oscillant (13 ou 31) pour chacune desdites roues, le bras oscillant étant monté d'une manière pivotante sur le véhicule pour le mouvement angulaire autour d'axes pivotants transversaux, un amortisseur (D) pour chaque bras oscillant, chaque amortisseur reliant le bras oscillant associé au véhicule par un raccord résilient, les deux bras oscillants étant interconnectés par des moyens (18 ou 52) pour imposer aux bras oscillants des mouvements correspondants dans des directions opposées et des moyens pour verrouiller sélectivement la suspension, **caractérisé en ce que** les moyens de verrouillage comprennent les amortisseurs (D).

2. Véhicule de type motocycle selon la revendication 1, **caractérisé en ce que** les moyens de verrouillage bloquent le mouvement du milieu de fonctionnement dans les amortisseurs (D).

3. Véhicule de type motocycle selon la revendication 2, dans lequel les amortisseurs sont interconnectés par une vanne qui peut être fermée par un solénoïde.

4. Véhicule de type motocycle selon la revendication 1 ou 2, dans lequel le milieu de travail dans les amortisseurs est électriquement raidissable.

5. Véhicule de type motocycle selon l'une quelconque des revendications précédentes, dans lequel un moyen résilient est incorporé à au moins une extrémité de chaque amortisseur afin de fournir un certain mouvement résiduel de suspension lorsque les moyens de verrouillage sont actionnés.

6. Véhicule de type motocycle selon l'une quelconque des revendications précédentes ayant une dite paire de roues à l'avant, dans lequel une articulation quadrilatérale est formée pour chaque roue par le bras oscillant (31), un bras supérieur (38) monté d'une manière pivotante à l'extrémité arrière pour le mouvement angulaire autour d'un axe transversal du véhicule et un montant (35) qui s'articule sur le bras supérieur (38) à son extrémité supérieure et sur le bras oscillant à son extrémité inférieure, et un système de tringles (62 à 65) interconnecte un membre de contrôle de direction (67) avec chaque montant (35).
